# EUROPÄISCHE PATENTANMELDUNG

(11) **EP 1 987 988 A2**
(43) Veröffentlichungstag der Anmeldung: **05.11.2008**
(21) Anmeldenummer: 08007570.8
(22) Anmeldetag: 18.04.2008
(51) Int. Cl.: B60R 5/04

(54) **Vorrichtung zum Unterteilen eines Heckstauraums**

(30) Priorität: 03.05.2007 DE 102007021432
(71) Anmelder: BOS GmbH & Co. KG, 73760 Ostfildern (DE)
(72) Erfinder: Ehrenberger, Marina, 73061 Ebersbach (DE)
(74) Vertreter: Patentanwälte Ruff, Wilhelm, Beier, Dauster & Partner

(57) **Zusammenfassung**

Die Erfindung betrifft eine- Vorrichtung zum Unterteilen eines Heckstauraums eines Fahrzeugs mit einem in Fahrzeuglängsrichtung (102) nach hinten ausziehbaren flexiblen Flächengebilde (130) und Haltemitteln (140, 150), mittels derer das Flächengebilde (130) in einem ausgezogenen Funktionszustand arretierbar ist.

Erfindungsgemäß sind die Haltemittel so ausgebildet sind, dass ein erster Flächenabschnitt (130a) des flexiblen Flächengebildes (130) sich im Funktionszustand in einer in etwa waagerechten Ebene erstreckt und ein sich in Fahrzeuglängsrichtung (102) hinter dem ersten Flächenabschnitt (130a) anschließender zweiter Flächenabschnitt (130b) des flexiblen Flächengebildes (130) sich im Funktionszustand in einer zur waagerechten Ebene angewinkelten Ebene erstreckt.

Verwendung insbesondere zur Unterteilung eines Heckstauraums in einen Bereich für ein Cabrioverdeck und einen Bereich für Gepäck.

## Beschreibung

### Anwendungsgebiet und Stand der Technik

Die Erfindung betrifft eine Vorrichtung zum Unterteilen eines Heckstauraums eines Fahrzeugs mit einem in Fahrzeuglängsrichtung nach hinten ausziehbaren flexiblen Flächengebilde und Haltemitteln, mittels derer das Flächengebilde in einem ausgezogenen Funktionszustand arretierbar ist.

Solche gattungsgemäßen Vorrichtungen zum Unterteilen eines Heckstauraums sind allgemein bekannt. Üblicherweise finden sie insbesondere als Laderaumabdeckungen in Kombifahrzeugen Anwendung. Das flexible Flächengebilde kann, üblicherweise von einer Rollowelle, in Fahrzeuglängsrichtung nach hinten ausgezogen und dort befestigt werden, so dass es den Einblick in unter dem Flächengebilde verstaute Gegenstände verwehrt. Bekannt sind gattungsgemäße Vorrichtungen auch zur Unterteilung eines Heckstauraums eines Cabriofahrzeugs in einen Teil, den das Cabrioverdeck im offenen Zustand des Cabriofahrzeugs einnimmt, und einen anderen Teil, der für Gepäck verwendet werden kann. Bei Vorrichtungen zum Unterteilen eines Heckstauraums eines Cabriofahrzeugs ist es weiterhin bekannt, dass an einem in Fahrzeuglängsrichtung hinteren Ende des Flächengebildes ein formstabiler und gegenüber dem Flächengebilde abklappbarer Abschnitt vorgesehen ist, der im Funktionszustand des Flächengebildes nach oben geklappt wird. Das Flächengebilde und der formstabile Abschnitte begrenzen dadurch gemeinsam einen Bereich nach unten und nach hinten, der der Aufnahme des Cabrioverdecks vorbehalten ist.

Als Nachteil an den aus dem Stand der Technik bekannten Vorrichtungen wird angesehen, dass der hintere Abschnitt, der im Funktionszustand in eine andere Richtung als in die des Flächengebildes weist, aufgrund seiner formstabilen Gestaltung unpraktisch in der Handhabung ist. So ist es insbesondere nachteilig, dass dieser formstabile Abschnitt im nicht ausgezogenen Stauzustand des Flächengebildes wertvollen Kofferraumplatz einnimmt und weitere Maßnahmen erforderlich macht, um zu verhindern, dass dieser formstabile Abschnitt sich ungewünscht frei bewegen kann.

### Aufgabe und Lösung

Aufgabe der Erfindung ist es daher, eine gattungsgemäße Vorrichtung zum Unterteilen eines Heckstauraums dahingehend weiterzubilden, dass sie unter Vermeidung oder Verminderung der Nachteile des Standes der Technik eine Trennbarkeit des Heckstauraums mit Trennmitteln, die in mehr als einer Ebene erstreckt sind, ermöglicht.

Gemäß der Erfindung wird diese Aufgabe durch eine gattungsgemäße Vorrichtung zum Unterteilen eines Heckstauraums eines Fahrzeugs gelöst, bei dem die Haltemittel so ausgebildet sind, dass ein erster Flächenabschnitt des flexiblen Flächengebildes sich im Funktionszustand in einer in etwa waagerechten Ebene erstreckt und ein sich in Fahrzeuglängsrichtung hinter dem ersten Flächenabschnitt anschließender zweiter Flächenabschnitt des flexiblen Flächengebildes sich im Funktionszustand in einer zur waagerechten Ebene angewinkelten Ebene erstreckt.

Bei einer erfindungsgemäßen Vorrichtung zum Unterteilen eines Heckstauraums ist es demnach vorgesehen, dass sowohl der erste als auch der zweite Flächenabschnitt durch das flexible Flächengebilde gebildet werden. Dies erlaubt eine Aufnahme des gesamten Flächengebildes im Stauzustand in einer besonders Platz sparenden Art und Weise, insbesondere aufgerollt auf einer Rollowelle. Die Unterteilung des Flächengebildes in den ersten und zweiten Flächenabschnitt erfolgt erst im Zuge der Überführung in den Funktionszustand durch Festlegung des Flächengebildes an den ersten und zweiten Haltemitteln. In diesem Funktionszustand erstreckt sich das Flächengebilde im Heckstauraum, vorzugsweise ausgehend von einer hinteren Sitzreihe, nach hinten und von einem definierten Umlenkpunkt bzw. einer Umlenkachse nach oben oder unten. Hierdurch wird erreicht, dass mit einem einheitlichen Flächengebilde ein getrennter Bereich des Heckstauraums gegenüber Beeinträchtigungen aus zwei Richtungen geschützt ist. Der getrennte Bereich kann insbesondere nach oben und hinten abgedeckt sein.

Besonders vorteilhaft ist dies bei einem Abschnitt des Heckstauraums, der der Aufnahme eines Cabrioverdecks vorbehalten ist. Hierbei erstreckt sich der erste Flächenabschnitt im Funktionszustand unterhalb eines eingeklappten Verdecks, während sich der zweite Flächenabschnitt vom hinteren Ende des ersten Flächenabschnitts nach oben erstreckt. Gemeinsam mit einer Heckstauraumwandung bildet das Flächengebilde in diesem Funktionszustand einen abgetrennten Bereich für das Verdeck mit einem in etwa U-förmigen Querschnitt. Dies gewährleistet, dass unter dem Verdeck liegendes Gepäck nicht zu hoch angeordnet ist und hinter dem Verdeck liegendes Gepäck nicht zu weit nach vorne gepackt wird. Darüber hinaus ist durch den nach oben weisenden zweiten Flächenabschnitt auch gewährleistet, dass Gepäck im Zuge eines Bremsvorgangs nicht bis in den Bereich des Verdecks kommt, wo es der Funktionstauglichkeit des Verdecks entgegenstehen könnte.

Bei einer Weiterbildung der Erfindung ist ein erstes Haltemittel vorgesehen, das zur Fixierung des Flächegebildes in einem Übergangsbereich zwischen dem ersten und zweiten Flächenabschnitt ausgebildet ist. Dieses erste Haltemittel ist dabei so ausgebildet, dass es eine Umlenkung des Flächengebildes ermöglicht. Dies bedeutet, dass das flexible Flächengebilde durch das erste Haltemittel in einer Art und Weise gehalten wird, das beim Hoch- oder Herunterführen des Flächegebildes vom hinteren Ende des ersten Flächenabschnitts eine Umlenkkante im Flächengebilde entsteht. Im einfachsten Falle beschränkt sich das erste Haltemittel auf beidseitig angeordnete und in Fahrzeugquerrichtung nach innen vorstehende Vorsprünge, über oder unter die das Flächengebilde gelegt wird, um dann nach unten bzw. oben geführt zu werden.

Bei einer Weiterbildung der Erfindung umfasst das erste Haltemittel in Fahrzeugquerrichtung beidseitig des Flächengebildes fahrzeugfeste erste Halteabschnitte, an denen im Funktionszustand ein das Flächengebilde umlenkendes Umlenkmittel festlegbar ist. Die ersten Haltemittel können demnach fallweise mit dem Umlenkmittel in Wirkverbindung gebracht werden, so dass das Umlenkmittel nicht permanent im Bereich der ersten Haltemittel vorgesehen werden muss. Die ersten Haltemittel können im einfachsten Falle U-förmige Profilabschnitte sein, die derart voneinander beabstandet sind, dass eine dieser Beabstandung bezüglich ihrer Länge entsprechende Umlenkstange als Umlenkmittel beidseitig eingreifen kann.

Eine Möglichkeit zur Gestaltung dieses Umlenkmittels sieht vor, dass das Umlenkmittel unmittelbar und fest mit dem Flächengebilde verbunden ist. In diesem Falle ist das Umlenkmittel im Übergangsbereich zwischen dem ersten und zweiten Flächenabschnitt fest vorgesehen und von diesem in üblichen Betriebssituationen nicht trennbar ausgebildet. Das Umlenkmittel kann dabei sowohl so ausgebildet sein, dass es einem Aufrollen des gesamten Flächengebildes, also des ersten und des zweiten Flächenabschnitts, nicht entgegensteht. Es kann jedoch auch so ausgebildet sein, dass ein Aufrollen nur des ersten Flächenabschnitts des Flächengebildes auf einer Rollowelle möglich ist, während der zweite Abschnitt nicht aufrollbar ist. In einem solchen Fall kann der zweite Flächenabschnitt des Flächengebildes jedoch dennoch aufgrund seiner Flexibilität Platz sparend in der Nähe der Rollowelle zusammengelegt gelagert werden.

Bei einer Weiterbildung der Erfindung ist am hinteren Ende des Flächengebildes ein das Flächengebilde begrenzender und vorzugsweise formstabiler Abschlussabschnitt vorgesehen. Dieser erleichtert die Handhabung, da er insbesondere einen Griff zum Herausziehen des Flächengebildes aufweisen kann. Zusätzlich kann der Abschlussabschnitt dem Flächengebilde eine hohe Stabilität geben, insbesondere wenn er sich über die vollständige Breite des Flächengebildes erstreckt.

Bei einer Weiterbildung der Erfindung ist ein zweites Haltemittel vorgesehen, welches in Fahrzeugquerrichtung beidseitig des Flächengebildes fahrzeugfeste zweite Halteabschnitte umfasst, an denen im Funktionszustand der Abschlussabschnitt festlegbar ist. Ähnlich dem ersten Haltemittel und dem korrespondierenden Umlenkmittel ist es so möglich, im Bereich der zweiten Halteabschnitte das flexible Flächengebilde festzulegen. Gemeinsam definieren das erste und das zweite Haltemittel so die Lage des flexiblen Flächengebildes im Funktionszustand.

Bei einer Weiterbildung der Erfindung ist das Umlenkmittel über Kopplungsmittel lösbar mit dem Abschlussabschnitt verbunden. Gemäß dieser Ausgestaltung sind das Umlenkmittel und der Abschlussabschnitt nicht ausschließlich über das flexible Flächengebilde miteinander wirkverbunden, sondern darüber hinaus oder stattdessen über die Kopplungsmittel. Diese umfassen vorzugsweise ein abschlussabschnittseitiges und ein umlenkmittelseitiges Kopplungsmittel, wobei die Kopplungsmittel miteinander in einen gekoppelten und einen ungekoppelten Kopplungszustand bringbar sind. Als Kopplungsmittel beispielsweise kommen Kopplungshaken oder Kopplungsstutzen in Frage, die in Kopplungseingriffe oder Kopplungsausnehmungen auf der Gegenseite eingreifen. Die Kopplungsmittel sind geeignet, den Abschlussabschnitt und die Umlenkmittel miteinander so zu verbinden, dass sie eine weitgehend starre Einheit bilden. Der Abschlussabschnitt und das Umlenkmittel können bei dieser Ausgestaltung im Stauzustand sowie zum großen Teil während der Überführung in den Funktionszustand und aus dem Funktionszustand in den Stauzustand gemeinsam gehandhabt werden. Sie werden nur dann voneinander getrennt, wenn das Flächengebilde in den Funktionszustand überführt wird und das Umlenkmittel bereits in die ersten Halteabschnitten eingesetzt ist.

Vorzugsweise weist das Umlenkmittel ein schaltbares Verriegelungsmittel zur Festlegung an den ersten Halteabschnitten auf, wobei das Verriegelungsmittel vorzugsweise in Abhängigkeit des Kopplungszustandes in einen Verriegelungszustand oder einen Entriegelungszustand überführbar ist. Durch die Gestaltung mit einem schaltbaren Verriegelungsmittel kann das Umlenkmittel, wenn es in die ersten Halteabschnitte eingesetzt wurde, dort festgelegt werden. Dies verhindert ein Lösen des Umlenkmittels aus den ersten Halteabschnitten. Die Verriegelungsmittel sind dabei vorzugsweise im Bereich der ersten Halteabschnitte vorgesehen. So kann beispielsweise ein Umlenkmittel derart ausgestaltet sein, dass es in die Halteabschnitte zunächst eingedrückt und dort verdreht wird, um den Verriegelungszustand einzunehmen. Besonders bevorzugt ist es, wenn das Verriegelungsmittel in Abhängigkeit des Kopplungszustandes seinen Verriegelungs- und Entriegelungszustand einnimmt. Bei einer solchen Ausgestaltung wird gleichzeitig mit dem Entkoppeln des Abschlussabschnitts vom Umlenkmittel der Verriegelungszustand hergestellt, so dass es nur einer Handlung durch einen Bediener bedarf. Dieser führt demnach das Umlenkmittel in die ersten Halte-abschnitte, entkoppelt dort den Abschlussabschnitt vom Umlenkmittel und stellt hierdurch den Verriegelungszustand her. Bei der Überführung des flexiblen Flächengebildes aus dem Funktionszustand in einen Stauzustand wird dagegen durch das Koppeln des Abschlussabschnitts an das Umlenkmittel der Entriegelungszustand hergestellt, der nachfolgend eine Entnahme des Umlenkmittels aus den ersten Halteabschnitten gestattet. Eine besonders einfache derartige Ausgestaltung ist durch axial nach außen verschiebbare Riegel am Umlenkmittel erzielbar, wobei die Riegel federkraftbeaufschlagt in ihre Verriegelungsposition gedrückt werden, sobald das abschlussabschnittsseitigen Kopplungsmittel vom Umlenkmittel entfernt wird.

Bei einer Weiterbildung der Erfindung ist das Verriegelungsmittel derart ausgebildet, dass es in Reaktion auf ein Verschwenken des Abschlussabschnitts ein Verriegelungszustand oder ein Entriegelungszustand einnimmt. Bei einer solchen Ausgestaltung erfolgt demnach die Änderung des Kopplungszustandes des Abschlussabschnitts vom Umlenkmittel durch eine Schwenkbewegung. Hierbei wird der Abschlussabschnitt gegenüber dem Umlenkmittel oder gemeinsam mit dem Umlenkmittel oder einem Teilabschnitt davon gegenüber den ersten Halteabschnitten verschwenkt. Eine solche Schwenkbewegung ist einfach zu bewerkstelligen und insbesondere dann sehr intuitiv, wenn sie in Richtung der Ebene erfolgt, in der sich der zweite Flächenabschnitt im Funktionszustand befindet.

Bei einer Weiterbildung der Erfindung weist das Umlenkmittel eine Hauptbaueinheit auf, die durch Einsetzen in das erste Haltemittel drehfest fixierbar ist, sowie eine Dreheinheit, die um eine Fahrzeugquerachse drehbar ausgebildet ist und die einen Drehriegel sowie eine mit dem Drehriegel drehfest verbundenen Aufnahme für das abschlussabschnittsseitige Kopplungsmittel aufweist. Gemäß dieser Weiterbildung besteht das Umlenkmittel demnach aus zwei Baueinheiten, die um eine Drehachse in Richtung der Fahrzeugquerachse gegeneinander drehbeweglich sind. Die erste Baueinheit bildet die Hauptbaueinheit, die von einem Bediener manuell in das Haltemittel eingesetzt wird. Anschlie-ßend erfolgt die Verriegelung des Umlenkmittels durch einen Drehriegel, der vorzugsweise im Bereich der ersten Halteabschnitte vorgesehen ist. Dieser Drehriegel wird dadurch gedreht, dass der Abschlussabschnitt gegenüber dem Umlenkmitteln bewegt wird, wobei dies mit einer Drehbewegung einer Aufnahme für das abschlussabschnittseitige Kopplungsmittel einhergeht. Diese Weiterbildung gestattet in einfacher Art und Weise die Kombination der Kopplung und der Verriegelung.

Bei einer Weiterbildung der Erfindung weist das umlenkseitige Kopplungsmittel eine längliche Ausnehmung auf, die in einem Eingriffabschnitt aufgeweitet ausgebildet ist. Das abschlussabschnittsseitige Kopplungsmittel ist dabei ein sich vom Abschlussabschnitt erstreckender Kopplungsstutzen, der an seinem distalen Ende eine Größe aufweist, die in die längliche Ausnehmung nur im Bereich des Eingriffsabschnitts einführbar ist. Eine derartige Gestaltung der Kopplungsmittel erlaubt eine Kopplung des Umlenkmittels und des Abschlussabschnitts dadurch, dass der Abschlussabschnitt mit seinen Kopplungsstutzen in die Eingriffsabschnitte des Umlenkmittels eingeführt und dann dort entlang der länglichen Ausnehmung verschoben oder verschwenkt wird, so dass in einer Endlage eine direkte Trennung des Umlenkmittels und Abschlussabschnitts ohne vorherige Rückverlagerung entlang der Ausnehmung nicht mehr möglich ist.

Bei einer Weiterbildung der Erfindung sind Kraftbeaufschlagungsmittel im Umlenkmittel vorgesehen, die im gekoppelten Zustand die abschlussabschnittsseitigen Kopplungsmittel in eine Sollposition drücken. Hierdurch kann Spiel zwischen dem Umlenkmittel und dem Abschlussabschnitt im gekoppelten Zustand verhindert werden, so dass die Entstehung unan-genehmer Geräusche verhindert wird der haptische Eindruck verbessert wird.

Bei einer Weiterbildung der Erfindung umfasst das Umlenkmittel ein Sicherungsmittel, welches derart ausgebildet ist, dass es eine Überführung der Kopplungsmittel in den entkoppelten Zustand erst ermöglicht, wenn das Umlenkmittel in die ersten Halteabschnitte eingesetzt ist. Hierdurch wird erreicht, dass eine ungewollte Trennung des Abschlussabschnitts vom Umlenkmittel und insbesondere eine Entkopplung au-ßerhalb der ersten Halteabschnitte nicht erfolgen können. Erst durch Einsetzten des Umlenkmittels in die ersten Halteabschnitte können die Kopplungsmittel entkoppelt werden. Dies kann beispielsweise dadurch erzielt werden, dass das Umlenkmittel durch das Einsetzen in die Halteabschnitte leicht gestaucht wird, so dass ein erster Abschnitt des Umlenkmittels und ein zweiter Abschnitt des Umlenkmittels gegeneinander verschoben werden und dadurch einen Sicherungsriegel in eine Lage überführen, in der er der Entkoppelung der Kopplungsmittel nicht mehr entgegensteht.

### Kurzbeschreibung der Zeichnungen

Weitere Vorteile und Merkmale der Erfindung ergeben sich aus den Ansprüchen sowie der nachfolgenden Beschreibung von bevorzugten Ausführungsbeispielen der Erfindung, die anhand der Zeichnungen dargestellt sind. Dabei zeigen:
- Figur 1 a bis 1 c: eine erste erfindungsgemäße Vorrichtung in einem Stauzustand und einem Funktionszustand und
- Figur 2a bis 2c: eine zweite erfindungsgemäße Vorrichtung in drei Zuständen bei der Überführung aus einem Stauzustand in einen Funktionszustand.

### Detaillierte Beschreibung der Ausführungsbeispiele

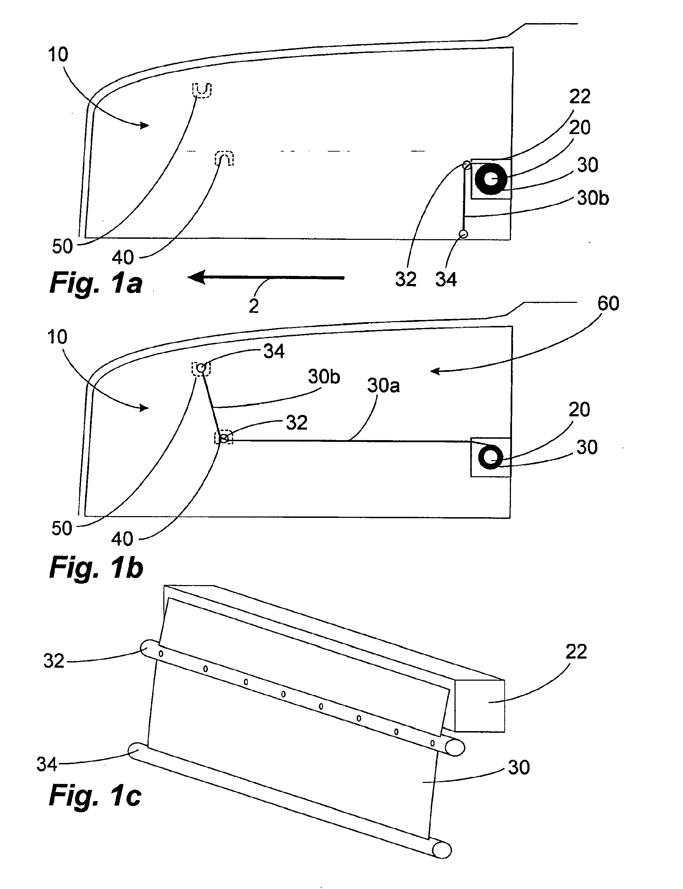

Die Figuren 1a bis 1c zeigen eine vergleichsweise einfache Ausgestaltung einer erfindungsgemäßen Vorrichtung.

Diese Ausführungsform besteht aus verschiedenen Elementen, die innerhalb eines Kofferraums 10 angeordnet sind. Diese Elemente umfassen eine drehbar innerhalb eines Rollogehäuses 22 gelagerte Rollowelle 20, auf der ein flexibles Flächengebilde 30 aufgerollt ist. In nicht dargestellter Art und Weise ist die Rollowelle 20 derart momentenbeaufschlagt, dass das flexible Flächengebilde 30 stets aus dem ausgezogenen Zustand zurück in den aufgerollten Zustand der Fig. 1 a gezogen wird, sofern es nicht im Funktionszustand fixiert ist. Das Rollogehäuse mit Flächengebilde ist separat auch in Fig. 1c dargestellt.

Weiterhin umfasst die Vorrichtung der Figuren 1a bis 1b erste Halteabschnitte 40 und zweite Halteabschnitte 50. Bei den Halteabschnitten 40, 50 handelt es sich jeweils um paarweise beidseitig des Kofferraums in Seitenwandung vorgesehene U-förmige Profilabschnitte. An dem flexiblen Flächengebilde 30 sind ein Umlenkmittel 32 sowie ein Abschlussabschnitt 34 vorgesehen. Bei dem Umlenkmittel 32 und dem Abschlussabschnitt 34 handelt es sich jeweils um fest mit dem flexiblen Flächengebilde 30 verbundene Gestänge, die sich über die vollständige Breite des flexiblen Flächengebildes 30 hinweg erstrecken und an den Seiten in der Fig. 1c entnehmbarer Art und Weise dieses überragen.

Die Figuren 1a und 1c zeigt einen Stauzustand. In diesem Stauzustand ist das flexible Flächegebilde 30 annähernd vollständig auf der Rollowelle 20 aufgerollt. Lediglich ein Abschnitt 30b zwischen dem Umlenkmittel 32 und dem Abschlussabschnitt 34 ist nicht aufgerollt, sondern hängt vom Rollogehäuse 22 nach unten. Ausgehend von diesem Stauzustand kann das flexible Flächengebilde 30, insbesondere durch manuelle Handhabung am Abschlussabschnitt 34, in Fahrzeuglängsrichtung 2 nach hinten gezogen werden, bis es soweit von der Rollowelle 20 abgerollt ist, dass das Umlenkmittel 32 von unten beidseitig in die ersten Halteabschnitte 40 eingeschoben werden kann. Anschließend wird der Abschlussabschnitt 34 in die oberen Halteabschnitte 50 eingehängt. Hierdurch wird der Funktionszustand erreicht, der in der Figur 1b dargestellt ist. Dabei ist ersichtlich, dass das flexible Flächengebilde in diesem Funktionszustand der Figur 1b einen ersten Flächenabschnitt 30a und einen zweiten Flächenabschnitt 30b aufweist, die verschieden ausgerichtet sind. Gemeinsam trennen sie einen Bereich 60 vom übrigen Kofferraumbereich ab. Dieser Bereich 60 ist durch die Flächenabschnitte 30a, 30b derart abgeschirmt, dass er sich zur Aufnahme eines nicht dargestellten Cabrioverdecks im offenen Zustand des Cabriofahrzeugs eignet. Durch die Erstreckung des Flächengebildes 30 im Funktionszustand ist es gewährleistet, dass weder unter dem Flächengebilde 30 liegendes Gepäck noch hinter dem Flächengebilde 30 liegendes Gepäck bis in den Bereich des Verdecks gelangen kann.

Besonders vorteilhaft ist es, wenn das flexible Flächengebilde in seiner Gesamtheit oder zumindest der zweite Flächenabschnitt 30b des flexiblen Flächengebildes 30 in begrenztem Maße elastisch ausgeführt ist und im Funktionszustand unter Zugspannung steht, so dass verhindert wird, dass das Umlenkmittel 32 aus den Halteabschnitten 40 herausrutscht.

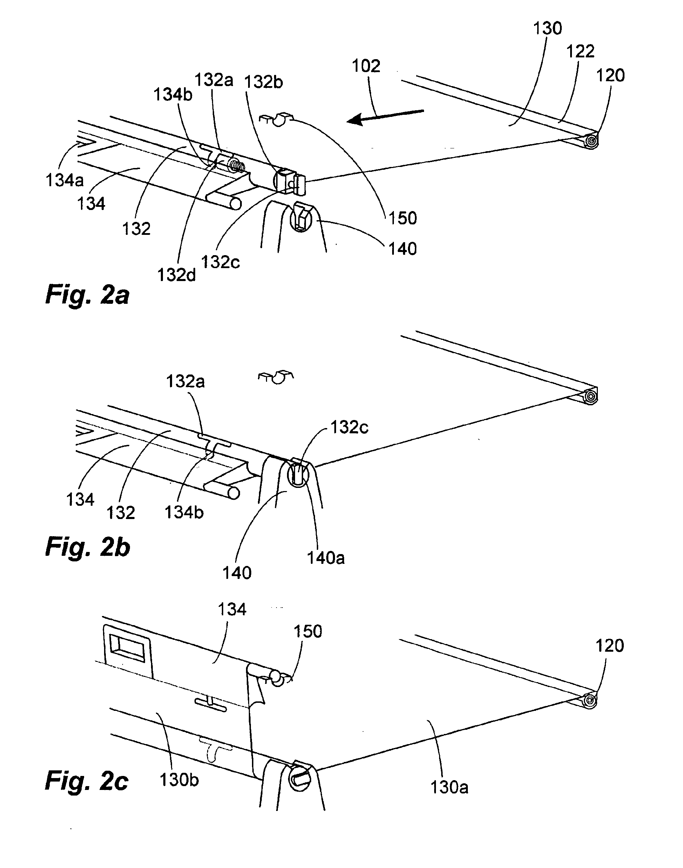

Eine besonders bevorzugte Ausführungsform ist in den Figuren 2a bis 2c dargestellt. Bei dieser zweiten Ausführungsform entspricht der Grundaufbau der Ausführungsform der Figuren 1a bis 1c. So ist eine Rollowelle 120 vorgesehen, die drehbar innerhalb eines Rollogehäuses 122 gelagert ist. Auf dieser Rollowelle ist ein flexibles Flächengebilde 130 aufrollbar. Beidseitig des flexiblen Flächengebildes befindet sich je ein erster Halteabschnitt 140 und je ein zweiter Halteabschnitt 150, wobei in den Figuren jeweils nur die rechtsseitigen Halteabschnitte 140, 150 dargestellt sind.

Weiterhin ist am Ende des flexiblen Flächengebildes 130 ein formstabiler Abschlussabschnitt 134 mit Handgriff 134a vorgesehen. Zum Umlenken des flexiblen Flächengebildes 130 ist weiterhin ein als Hohlrohr ausgebildetes Umlenkrohr 132 vorgesehen.

Abweichend von der Ausführungsform der Figuren 1a bis 1c ist das Umlenkmittel 132 nicht unmittelbar mit dem flexiblen Flächengebilde verbunden. Es ist stattdessen über einen Kopplungsmechanismus, bestehend aus einem abschlussabschnittsseitigen T-förmigen Kopplungsstutzen 134b sowie einer umlenkrohrseitigen T-förmigen Ausnehmung 132a mit dem Umlenkrohr 132 gekoppelt. Dieser Zustand ist in Figur 2a dargestellt. Dabei wird der Kopplungsstutzen 134b durch einen federkraftbeaufschlagten Haltezylinder 132d gegen den Rand der Ausnehmung 132a gedrückt, so dass Klappergeräusche vermieden werden. In diesem gekoppelten Zustand befinden sich das Umlenkmittel 132 und der Abschlussabschnitt 134 in einem Zustand unmittelbar nach Herausziehen des Flächengebildes von der Rollowelle 120 in Richtung 102. Dabei wird das flexible Flächengebilde 130 wie in Figur 2a dargestellt von der Rollowelle 120 abgezogen, bis sich das Umlenkmittel 132 in etwa im Bereich der ersten Halteabschnitte 140 befindet. In dieser Lage wird das Umlenkmittel 132 mit quaderförmigen Abschnitten 132b des Umlenkmittels 132 in eine entsprechend geformte Ausnehmung des Haltemittels 140 von oben eingeschoben. Der eingeschobene Zustand ist der Figur 2b dargestellt. Ausgehend hiervon der Abschlussabschnitt 134 gegenüber dem Umlenkrohr 132 nach oben verschwenkt. Durch eine an die Form der Kopplungsstutzen 134b des Abschlussabschnitts 134 angepasste nicht näher dargestellte Ausnehmungen innerhalb des Umlenkrohrs 132, in denen die Kopplungsstutzen 134b zu diesem Zeitpunkt angeordnet sind, wird dabei gemeinsam mit dem Abschlussabschnitt 134 ein Drehriegel 132c um etwa 90° verdreht. Da dieser Drehriegel 132c im Zuge des Einführens des Umlenkrohrs 132 in die Halteabschnitte 140 in eine drehbare Ausnehmung 140a des Halteabschnitts 140 eingefügt wurde, wird diese drehbare Ausnehmung 140a mit verdreht. Hierdurch wird ein Verriegelungszustand erreicht, der verhindert, dass das Umlenkrohr 132 aus den Halteabschnitten 140 herausgezogen werden kann. Gleichzeitig wird durch das Verschwenken des Abschlussabschnitts 134 gegenüber dem Umlenkrohr 132 ein entriegelter Zustand hergestellt, da in dem verschwenkten Zustand ein direktes Herausziehen des T-förmigen Kopplungsstutzens 134b des Abschlussabschnitts 134 aus der T-förmigen Ausnehmung 132a des Umlenkrohrs 132 möglich ist. Ausgehend von diesem entriegelten Zustand kann nunmehr der Abschlussabschnitt 134 ohne das Umlenkrohr 132 nach oben gezogen werden und dort in die zweiten Halteabschnitte 150 eingelegt werden. Durch die Momentenbelastung die auf die Rollowelle 120 wirkt, wird der Abschlussabschnitt 134 dabei sicher in den zweiten Halteabschnitten 150 gehalten.

Der erreichte Funktionszustand zeichnet sich dadurch aus, dass das Flächengebilde 130 in zwei zueinander angewinkelte Flächenabschnitte 130a, 130b unterteilt wird.

Bei der Rückführung des flexiblen Flächengebildes 130 in seinen Stauzustand wird in umgekehrter Reihenfolge vorgegangen. Der Abschlussabschnitt 134 wird aus den zweiten Halteabschnitten 150 herausgehoben und zurück zum Umlenkrohr 132 geführt. Dort werden die abschlussabschnittsseitigen Kopplungsstutzen 134b wiederum in die Kopplungsausnehmungen 132a eingeführt und dort verschwenkt. Dadurch kommt es zu einer Entriegelung des Umlenkrohrs 130, welches -nachfolgend im mit dem Abschlussabschnitt 134 gekoppelten Zustand zurück bis in seine Staulage in unmittelbarer Nähe des Rollogehäuses 122 geführt werden kann.

In nicht dargestellter Art und Weise kann eine weitere Verbesserung dadurch erzielt werden, dass eine Entkoppelung des Abschlussabschnitts 134 vom Umlenkrohr 132 erst dann möglich ist, wenn das Umlenkrohr 132 in die ersten Halteabschnitte 140 eingelegt wurde. Dies verhindert, dass eine Entkoppelung stattfindet, bevor das Umlenkrohr 132 in die Halteabschnitte 140 eingelegt ist.

## Patentansprüche

1. Vorrichtung zum Unterteilen eines Heckstauraums (10) eines Fahrzeugs mit
- einem in Fahrzeuglängsrichtung (2; 102) nach hinten ausziehbaren flexiblen Flächengebilde (30; 130) und
- Haltemitteln (4, 50; 140, 150), mittels derer das Flächengebilde (30; 130) in einem ausgezogenen Funktionszustand arretierbar ist,
**dadurch gekennzeichnet, dass**
die Haltemittel so ausgebildet sind, dass
- ein erster Flächenabschnitt (30a; 130a) des flexiblen Flächengebildes (30; 130) sich im Funktionszustand in einer in etwa waagerechten Ebene erstreckt und
- ein sich in Fahrzeuglängsrichtung (2; 102) hinter dem ersten Flächenabschnitt (30a; 130a) anschließender zweiter Flächenabschnitt (30b; 130b) des flexiblen Flächengebildes (30; 130) sich im Funktionszustand in einer zur waagerechten Ebene angewinkelten Ebene erstreckt.

2. Vorrichtung nach Anspruch 1,
**dadurch gekennzeichnet, dass**
die Vorrichtung zum Unterteilen eines Heckstauraums (10) eines Cabrio-Fahrzeugs vorgesehen ist, wobei sich der erste Flächenabschnitt (30a; 130a) im Funktionszustand unterhalb eines eingeklappten Verdecks erstreckt und wobei sich der zweite Flächenabschnitt (30b; 130b) vom hinteren Ende des ersten Flächenabschnitts (30a; 130a) nach oben erstreckt.

3. Vorrichtung nach Anspruch 1 oder 2,
**dadurch gekennzeichnet, dass**
ein erstes Haltemittel (40, 32; 140, 132) vorgesehen ist, das zur Fixierung des Flächengebildes (30; 130) in einem Übergangsbereich zwischen dem ersten und dem zweiten Flächenabschnitt (30a, 30b; 130a, 130b) ausgebildet ist.

4. Vorrichtung nach Anspruch 3,
**dadurch gekennzeichnet, dass**
das erste Haltemittel (40, 32; 140, 132) in Fahrzeugquerrichtung beidseitig des Flächengebildes fahrzeugfeste erste Halteabschnitte (40; 140) umfasst, an denen im Funktionszustand ein das Flächengebilde (30; 130) umlenkendes Umlenkmittel (32; 132) festlegbar ist.

5. Vorrichtung nach Anspruch 4,
**dadurch gekennzeichnet, dass**
das Umlenkmittel (32; 132) eine sich über die Breite des Flächengebildes (30; 130) erstrecke Umlenkstange (32; 132) ist.

6. Vorrichtung nach Anspruch 4 oder 5,
**dadurch gekennzeichnet, dass**
das Umlenkmittel (32) unmittelbar und fest mit dem Flächengebilde (30) verbunden ist.

7. Vorrichtung nach einem der vorstehenden Ansprüche,
**dadurch gekennzeichnet, dass**
am hinteren Ende des Flächengebildes (30; 130) ein das Flächengebilde (30; 130) begrenzender und vorzugsweise formstabiler Abschlussabschnitt (34; 134) vorgesehen ist.

8. Vorrichtung nach Anspruch 7,
**dadurch gekennzeichnet, dass**
ein zweites Haltemittel (50, 34; 150, 134) in Fahrzeugquerrichtung beidseitig des Flächengebildes (30; 130) fahrzeugfeste zweite Halteabschnitte (50; 150) umfasst, an denen im Funktionszustand der Abschlussabschnitt (34; 134) festlegbar ist.

9. Vorrichtung nach Anspruch 7 oder 8,
**dadurch gekennzeichnet, dass**
das Umlenkmittel (132) über Kopplungsmittel (132a, 134b) lösbar mit dem Abschlussabschnitt (134) verbindbar ist.

10. Vorrichtung nach Anspruch 9,
**dadurch gekennzeichnet, dass**
die Kopplungsmittel (132a, 134b) ein abschlussabschnittseitigen und ein umlenkmittelseitiges Kopplungsmittel (132a, 134b) umfassen, wobei die Kopplungsmittel (132a, 134b) miteinander in einen gekoppelten und einen ungekoppelten Kopplungszustand bringbar sind.

11. Vorrichtung nach Anspruch 10,
**dadurch gekennzeichnet, dass**
das Umlenkmittel (132) ein schaltbares Verriegelungsmittel (132c) zur Festlegung an den ersten Halteabschnitten (140) aufweist, wobei das Verriegelungsmittel (132c) vorzugsweise in Abhängigkeit des Kopplungszustandes in einen Verrieglungszustand oder einen Entriegelungszustand überführbar ist.

12. Vorrichtung nach Anspruch 11,
**dadurch gekennzeichnet, dass**
das Verriegelungsmittel (132c) derart ausgebildet ist, dass es in Reaktion auf ein Verschwenken des Abschlussabschnitts (134) einen Verrieglungszustand oder einen Entriegelungszustand einnimmt.

13. Vorrichtung nach Anspruch 10 oder 11,
**dadurch gekennzeichnet, dass**
das Umlenkmittel (132) eine Hauptbaueinheit (132b), die durch Einsetzen in das erste Haltemittel drehfest fixierbar ist, und eine Dreheinheit (132c) aufweist, die um eine Fahrzeugquerachse drehbar ausgebildet ist und die einen Drehriegel (132c) sowie eine mit dem Drehriegel (132c) drehfest verbundene Aufnahme für das abschlussabschnittsseitige Kopplungsmittel (134b) aufweist.

14. Vorrichtung nach einem der Ansprüche 10 bis 13,
**dadurch gekennzeichnet, dass**
das umlenkmittelseitige Kopplungsmittel (132a) eine längliche Ausnehmung (132a) aufweist, die in einem Eingriffsabschnitt aufgeweitet ausgebildet ist, und das abschlussabschnittsseitige Kopplungsmittel (134b) ein sich von Abschlussabschnitt erstreckender Kopplungsstutzen (134b) ist, der an seinem distalen Ende eine Größe aufweist, die in die längliche Ausnehmung (132a) nur im Bereich des Eingriffsabschnitts einführbar ist.

15. Vorrichtung nach Anspruch 14,
**dadurch gekennzeichnet, dass**
Kraftbeaufschlagungsmittel (132d) im Umlenkmittel (132) vorgesehen sind, die im gekoppelten Zustand die abschlussabschnittseitigen Kopplungsmittel (134b) in eine Sollposition drücken.

16. Vorrichtung nach einem der Ansprüche 9 bis 15,
**dadurch gekennzeichnet, dass**
das Umlenkmittel ein Sicherungsmittel umfasst, welches derart ausgebildet ist, dass es eine Überführung der Kopplungsmittel in den entkoppelten Zustand erst ermöglicht, wenn das Umlenkmittel in die ersten Halteabschnitte eingesetzt ist.
